# EUROPÄISCHE PATENTSCHRIFT

(11) **EP 3 671 153 B1**
(45) Veröffentlichungstag und Bekanntmachung des Hinweises auf die Patenterteilung: **10.05.2023**
(21) Anmeldenummer: 19213821.2
(22) Anmeldetag: 05.12.2019
(51) Int. Cl.: G01K 17/06, F24D 19/10

(54) **VERFAHREN ZUR ERMITTLUNG EINES ERWARTUNGSWERTES EINER NENNLEISTUNG EINES UNBEKANNTEN HEIZKÖRPERS UND EINES ERWARTUNGSWERTES MINDESTENS EINES THERMISCHEN KOPPLUNGSPARAMETERS EINES ELEKTRONISCHEN HEIZKOSTENVERTEILERS AUF DEM UNBEKANNTEN HEIZKÖRPER UND PARAMETRIERVERFAHREN ZUR PARAMETRIERUNG EINES ELEKTRONISCHEN HEIZKOSTENVERTEILERS**
METHOD FOR DETERMINING AN EXPECTED VALUE OF A NOMINAL OUTPUT OF AN UNKNOWN HEATING BODY AND AN EXPECTED VALUE OF AT LEAST ONE THERMAL COUPLING PARAMETER OF AN ELECTRONIC HEATING COST DISTRIBUTOR ON THE UNKNOWN HEATING BODY AND PARAMETERIZATION METHOD FOR PARAMETERIZING AN ELECTRONIC HEATING COST DISTRIBUTOR
PROCÉDÉ DE DÉTERMINATION D'UNE VALEUR ESCOMPTÉE D'UNE PUISSANCE NOMINALE D'UN RADIATEUR INCONNU ET D'UNE VALEUR ESCOMPTÉE D'AU MOINS UN PARAMÈTRE D'ACCOUPLEMENT THERMIQUE D'UN RÉPARTITEUR DE COÛTS DE CHAUFFAGE ÉLECTRONIQUE SUR LE RADIATEUR INCONNU ET PROCÉDÉ DE PARAMÉTRAGE D'UN RÉPARTITEUR DE COÛTS DE CHAUFFAGE ÉLECTRONIQUE

(30) Priorität: 20.12.2018 DE 102018133080
(43) Veröffentlichungstag der Anmeldung: 24.06.2020
(73) Patentinhaber: QUNDIS GmbH, 99098 Erfurt (DE)
(72) Erfinder: KUHN, Jens, 98693 Ilmenau (DE)
(74) Vertreter: Liedtke & Partner Patentanwälte

(56) Entgegenhaltungen:
- DE-A1- 3 234 850
- DE-B3- 10 317 476
- Gesellschaft für Energiemess-und Auswertesysteme (GEMAS) GmbH: "Programmbeschreibung Heizkörperbewertungssoftware", , 27. August 2009 (2009-08-27), XP055686131, Gefunden im Internet: URL:http://www.gemas.de/softguide/HKB100.p df [gefunden am 2020-04-16]
- Günter Zöllner ET AL: "WeBeS - Wozu DataSet-Heizkörperbestimmung?", , 8. Dezember 2002 (2002-12-08), XP055686597, Gefunden im Internet: URL:http://web.archive.org/web/20021208120 044/http://webes-berlin.de/dataset/wozu.ht m [gefunden am 2020-04-16] & Günter Zöllner ET AL: "WeBeS - Was bietet die DataSet Heizkörperbestimmung?", , 7. April 2002 (2002-04-07), XP055686601, Gefunden im Internet: URL:http://web.archive.org/web/20020407055 337/http://www.webes-berlin.de/dataset/was .htm [gefunden am 2020-04-16] & Günter Zöllner ET AL: "WeBeS - Wie funktioniert die DataSet Heizkörperbestimmung?", , 7. April 2002 (2002-04-07), XP055686599, Gefunden im Internet: URL:http://web.archive.org/web/20020407053 933/http://www.webes-berlin.de/dataset/wie .htm [gefunden am 2020-04-16] & Günter Zöllner ET AL: "WeBeS - Vorteile der DataSet-Heizkörperbestimmung", , 10. März 2002 (2002-03-10), XP055686494, Gef
- Qundis: "QUNDIS Kc-Werte Datenbank - Softwarebeschreibung", , 7. Oktober 2011 (2011-10-07), Seiten 1-26, XP055686097, Gefunden im Internet: URL:https://docplayer.org/65510350-Qundis- kc-werte-datenbank-softwarebeschreibung.ht ml [gefunden am 2020-04-15]

## Beschreibung

Die Erfindung betrifft ein Verfahren zur Ermittlung eines als Schätzwert ausgebildeten Erwartungswertes einer Nennleistung eines unbekannten Heizkörpers und eines als Schätzwert ausgebildeten Erwartungswertes mindestens eines thermischen Kopplungsparameters eines elektronischen Heizkostenverteilers auf dem unbekannten Heizkörper entsprechend Anspruch 1.

Aus den folgenden Dokumenten des Stands der Technik sind bereits Verfahren zum Identifizieren eines bekannten Heizkörpers anhand einer Heizkörperdatenbank und zum Auslesen der in der Heizkörperdatenbank für diesen identifizierten bekannten Heizkörper gespeicherten exakten Werte der Nennleistung und des mindestens einen thermischen Kopplungsparameters bekannt geworden:
- Gesellschaft für Energiemess-und Auswertesysteme (GEMAS) GmbH: "Programmbeschreibung Heizkörperbewertungssoftware", 27. August 2009, URL:http://www.gemas.de/softguide/ HKB 100.pdf;
- Günter Zöllner et al.: "WeBeS - Wozu wird Heizkörperbestimmung benötigt? DataSet-Heizkörperbestimmung", 8. Dezember 2002, URL:http://web.archive.org/web/20021208120044/ http://webes-berlin.de/dataset/wozu.htm.

Um mit einem elektronischen Heizkostenverteiler die von einem Heizkörper abgegebene Wärmemenge möglichst exakt zu ermitteln, werden mindestens ein thermischer Kopplungsparameter des Heizkostenverteilers am Heizkörper sowie die Nennleistung des Heizkörpers benötigt. Diese Informationen werden spätestens zur Kostenverteilung benötigt. Idealerweise liegen sie jedoch schon bei Inbetriebnahme des Heizkostenverteilers vor, denn nur so liefern die angezeigten Verbrauchswerte eine plausible Information zur abgegebenen Wärmemenge des Heizkörpers. Da Heizkörper in einer sehr großen Vielfalt produziert werden und kein Typenschild besitzen, ist es im Allgemeinen sehr aufwendig, für einen unbekannten Heizkörper dessen Nennleistung und mindestens einen thermischen Kopplungsfaktor für den verwendeten Heizkostenverteiler zu ermitteln.

Der Erfindung liegt die Aufgabe zu Grunde, ein gegenüber dem Stand der Technik verbessertes Verfahren zur Ermittlung eines Erwartungswertes einer Nennleistung eines unbekannten Heizkörpers und eines Erwartungswertes mindestens eines thermischen Kopplungsparameters eines elektronischen Heizkostenverteilers auf dem unbekannten Heizkörper sowie ein gegenüber dem Stand der Technik verbessertes Parametrierverfahren zur Parametrierung eines elektronischen Heizkostenverteilers anzugeben.

Die Aufgabe wird erfindungsgemäß gelöst durch ein Verfahren zur Ermittlung eines als Schätzwert ausgebildeten Erwartungswertes einer Nennleistung eines unbekannten Heizkörpers und eines als Schätzwert ausgebildeten Erwartungswertes mindestens eines thermischen Kopplungsparameters eines elektronischen Heizkostenverteilers auf dem unbekannten Heizkörper mit den Merkmalen des Anspruchs 1.

Vorteilhafte Ausgestaltungen der Erfindung sind Gegenstand der Unteransprüche.

In einem erfindungsgemäßen Verfahren zur Ermittlung eines als Schätzwert ausgebildeten Erwartungswertes einer Nennleistung, d. h. einer Heiznennleistung eines unbekannten Heizkörpers, und eines als Schätzwert ausgebildeten Erwartungswertes mindestens eines thermischen Kopplungsparameters oder eines jeweiligen als Schätzwert ausgebildeten Erwartungswertes mehrerer thermischer Kopplungsparameter eines elektronischen Heizkostenverteilers auf dem unbekannten Heizkörper, werden der Erwartungswert der Nennleistung des unbekannten Heizkörpers und der Erwartungswert des mindestens einen thermischen Kopplungsparameters oder der jeweilige Erwartungswert der mehreren thermischen Kopplungsparameter des Heizkostenverteilers auf dem unbekannten Heizkörper anhand einer Heizkörperdatenbank ermittelt, die eine Mehrzahl verschiedener Heizkörper mit einem jeweiligen Nennwert der Nennleistung des jeweiligen Heizkörpers und einem jeweiligen Wert des mindestens einen thermischen Kopplungsparameters oder der jeweiligen Werte der mehreren thermischen Kopplungsparameter des Heizkostenverteilers auf dem jeweiligen Heizkörper enthält. Das erfindungsgemäße Verfahren kann insbesondere zur Parametrierung des für den unbekannten Heizkörper vorgesehenen elektronischen Heizkostenverteilers verwendet werden. Mittels des Verfahrens können auch mehrere verschiedene thermische Kopplungsparameter berücksichtigt werden, beispielsweise für einen Zwei-Fühler-Heizkostenverteiler die thermische Kopplung eines Heizkörpersensors, eines Luftsensors und einer Differenztemperatur. Der thermische Kopplungsparameter oder der jeweilige thermische Kopplungsparameter ist insbesondere ein c-Wert. Definiert sind solche thermischen Kopplungsparameter beispielsweise in der Norm EN834:2013 + AC:2015 (D).

Das erfindungsgemäße Verfahren ermöglicht die Ermittlung des Erwartungswertes für den mindestens einen thermischen Kopplungsparameter, d. h. für einen Parameter zur thermischen Kopplung des Heizkostenverteilers auf dem unbekannten Heizkörper, oder für mehrere solche thermische Kopplungsparameter, und für die Nennleistung des unbekannten Heizkörpers, insbesondere für einen unbekannten Heizkörpertyp. Dadurch wird die Parametrierung des elektronischen Heizkostenverteilers ermöglicht, um mit diesem elektronischen Heizkostenverteiler eine möglichst genaue Ermittlung der vom Heizkörper abgegebenen Wärmemenge sicherzustellen.

Erfindungsgemäß enthält die Heizkörperdatenbank für jeden Heizkörper eine Mehrzahl von Formparametern, von denen mindestens jeweils einer relevant für die Nennleistung des jeweiligen Heizkörpers und/oder für den mindestens einen thermischen Kopplungsparameter oder den jeweiligen thermischen Kopplungsparameter des Heizkostenverteilers auf dem jeweiligen Heizkörper ist, insbesondere mindestens einen relevanten Formparameter für den mindestens einen thermischen Kopplungsparameter oder den jeweiligen thermischen Kopplungsparameter des Heizkostenverteilers auf dem jeweiligen Heizkörper und einen relevanten Formparameter für die Nennleistung des jeweiligen Heizkörpers. Anhand eines ermittelten Formparameterwertes des mindestens einen für die Nennleistung und/oder für den mindestens einen thermischen Kopplungsparameter oder den jeweiligen thermischen Kopplungsparameter relevanten Formparameters des unbekannten Heizkörpers wird mindestens der dem unbekannten Heizkörper ähnlichste Heizkörper in der Heizkörperdatenbank ermittelt, wobei anhand dessen Nennleistung der Erwartungswert der Nennleistung des unbekannten Heizkörpers ermittelt wird und/oder anhand dessen thermischen Kopplungsparameter oder jeweiligen thermischen Kopplungsparameter des Heizkostenverteilers auf dem Heizkörper der Erwartungswert des mindestens einen thermischen Kopplungsparameters oder des jeweiligen thermischen Kopplungsparameters des Heizkostenverteilers auf diesem unbekannten Heizkörper ermittelt wird.

Dadurch wird es ermöglicht, anhand des mindestens einen Formparameters mindestens den zum unbekannten Heizkörper ähnlichsten Heizkörper in der Heizkörperdatenbank zu ermitteln und dadurch eine entsprechend zumindest ähnliche Nennleistung und/oder einen entsprechend zumindest ähnlichen thermischen Kopplungsparameter des Heizkostenverteilers auf dem Heizkörper zur Ermittlung des jeweiliger Erwartungswertes zu verwenden, wodurch der ermittelte jeweilige Erwartungswert eine tatsächliche Nennleistung und/oder einen tatsächlichen thermischen Kopplungsparameter oder jeweiligen thermischen Kopplungsparameter trifft oder diesem zumindest sehr nahe kommt.

Unter Formparameter ist insbesondere eine Angabe zu einer Abmessung und/oder zu einer Form des Heizkörpers zu verstehen, beispielsweise eine Heizkörperlänge, Heizkörperbreite, Heizkörpertiefe, eine Heizkörperoberflächenform, ein Heizkörperoberflächenprofil, eine Heizkörperflächenanzahl und/oder andere Formparameter. Es kann auch vorgesehen sein, dass nicht nur ein Formparameter verwendet wird, sondern mehrere Formparameter, um eine bessere Ermittlung des bzw. der jeweiligen ähnlichsten Heizkörper in der Heizkörperdatenbank zu ermöglichen.

In einer Ausführungsform des Verfahrens wird ein Formparameterwert des mindestens einen für die Nennleistung relevanten Formparameters des unbekannten Heizkörpers ermittelt, anhand dessen in der Heizkörperdatenbank der dem unbekannten Heizkörper hinsichtlich des mindestens einen für die Nennleistung relevanten Formparameters am ähnlichsten ausgeformte Heizkörper ermittelt wird, wobei der Erwartungswert der Nennleistung des unbekannten Heizkörpers mittels einer Trendanalyse aus der Nennleistung dieses ähnlichsten Heizkörpers und einer Abweichung zwischen dem ermittelten Formparameterwert des unbekannten Heizkörpers und dem Formparameterwert des ähnlichsten Heizkörpers ermittelt wird. Dadurch wird eine möglichst genaue Ermittlung des Erwartungswertes der Nennleistung des unbekannten Heizkörpers ermöglicht, so dass der Erwartungswert einem tatsächlichen Wert der Nennleistung zumindest sehr nahe kommt.

In einer Ausführungsform des Verfahrens wird ein Formparameterwert des mindestens einen für die Nennleistung relevanten Formparameters des unbekannten Heizkörpers ermittelt, anhand dessen in der Heizkörperdatenbank die dem unbekannten Heizkörper hinsichtlich des mindestens einen für die Nennleistung relevanten Formparameters am ähnlichsten ausgeformten Heizkörper ermittelt werden, wobei der Erwartungswert der Nennleistung des unbekannten Heizkörpers mittels einer Trendanalyse aus den Nennleistungen dieser ähnlichsten Heizkörper und einer Abweichung zwischen dem ermittelten Formparameterwert des unbekannten Heizkörpers und den Formparameterwerten der ähnlichsten Heizkörper ermittelt wird. Dadurch wird eine noch genauere Ermittlung des Erwartungswertes der Nennleistung des unbekannten Heizkörpers ermöglicht, so dass der Erwartungswert einem tatsächlichen Wert der Nennleistung noch näher kommt.

In einer Ausführungsform des Verfahrens werden Formparameterwerte mehrerer für die Nennleistung relevanter Formparameter des unbekannten Heizkörpers ermittelt, anhand derer in der Heizkörperdatenbank der dem unbekannten Heizkörper hinsichtlich dieser für die Nennleistung relevanten Formparameter am ähnlichsten ausgeformte Heizkörper ermittelt wird oder die dem unbekannten Heizkörper hinsichtlich dieser für die Nennleistung relevanten Formparameter am ähnlichsten ausgeformten Heizkörper ermittelt werden, wobei der Erwartungswert der Nennleistung des unbekannten Heizkörpers mittels einer Trendanalyse aus der Nennleistung dieses ähnlichsten Heizkörpers und der Abweichung zwischen den ermittelten Formparameterwerten des unbekannten Heizkörpers und den Formparameterwerten des ähnlichsten Heizkörpers ermittelt wird bzw. aus den Nennleistungen dieser ähnlichsten Heizkörper und den Abweichungen zwischen den ermittelten Formparameterwerten des unbekannten Heizkörpers und den Formparameterwerten der ähnlichsten Heizkörper ermittelt wird. Dadurch wird eine nochmalig verbesserte Ermittlung des Erwartungswertes der Nennleistung des unbekannten Heizkörpers ermöglicht, so dass der Erwartungswert einem tatsächlichen Wert der Nennleistung noch näher kommt.

In einer Ausführungsform des Verfahrens werden Formparameterwerte mehrerer für die Nennleistung relevanter Formparameter des unbekannten Heizkörpers ermittelt, anhand derer in der Heizkörperdatenbank für jeden für die Nennleistung relevanten Formparameter der dem unbekannten Heizkörper hinsichtlich des jeweiligen für die Nennleistung relevanten Formparameters am ähnlichsten ausgeformten Heizkörper ermittelt wird, wobei der Erwartungswert der Nennleistung des unbekannten Heizkörpers mittels einer Trendanalyse aus den Nennleistungen dieser ähnlichsten Heizkörper und den Abweichungen zwischen den ermittelten Formparameterwerten des unbekannten Heizkörpers und den Formparameterwerten der ähnlichsten Heizkörper ermittelt wird, insbesondere indem zunächst mit jedem der ähnlichsten Heizkörper mittels der Trendanalyse aus der Nennleistung des jeweiligen ähnlichsten Heizkörpers und der Abweichung zwischen dem ermittelten Formparameterwert des unbekannten Heizkörpers und dem Formparameterwert des bezüglich des jeweiligen Formparameters ähnlichsten Heizkörpers ein vorläufiger Erwartungswert ermittelt wird und der Erwartungswert der Nennleistung des unbekannten Heizkörpers aus dem Durchschnitt der vorläufigen Erwartungswerte gebildet wird. Dadurch wird eine nochmalig verbesserte Ermittlung des Erwartungswertes der Nennleistung des unbekannten Heizkörpers ermöglicht, so dass der Erwartungswert einem tatsächlichen Wert der Nennleistung noch näher kommt.

In einer Ausführungsform des Verfahrens wird am unbekannten Heizkörper ein Formparameterwert des mindestens einen für den mindestens einen thermischen Kopplungsparameter oder für den jeweiligen thermischen Kopplungsparameter relevanten Formparameters des Heizkostenverteilers auf dem unbekannten Heizkörper ermittelt, anhand dessen in der Heizkörperdatenbank der dem unbekannten Heizkörper hinsichtlich des mindestens einen für den mindestens einen thermischen Kopplungsparameter oder für den jeweiligen thermischen Kopplungsparameter relevanten Formparameters am ähnlichsten ausgeformte Heizkörper ermittelt wird, wobei
- wenn der unbekannte Heizkörper und der ähnlichste Heizkörper hinsichtlich des mindestens einen für den mindestens einen thermischen Kopplungsparameter oder für dem jeweiligen thermischen Kopplungsparameter relevanten Formparameters identisch sind oder eine Abweichung des ermittelten Formparameterwerts des unbekannten Heizkörpers vom Formparameterwert des ähnlichsten Heizkörpers einen vorgegebenen Grenzwert nicht überschreitet, der thermische Kopplungsparameter oder der jeweilige thermische Kopplungsparameter des Heizkostenverteilers auf dem ähnlichsten Heizkörper als Erwartungswert des mindestens einen thermischen Kopplungsparameters bzw. des jeweiligen thermischen Kopplungsparameters des Heizkostenverteilers auf dem unbekannten Heizkörpers ermittelt wird, und
- wenn die Abweichung des ermittelten Formparameterwerts des unbekannten Heizkörpers vom Formparameterwert des ähnlichsten Heizkörpers den vorgegebenen Grenzwert überschreitet, anhand des Formparameterwertes des mindestens einen für den mindestens einen thermischen Kopplungsparameter oder für den jeweiligen thermischen Kopplungsparameter relevanten Formparameters des Heizkostenverteilers auf dem unbekannten Heizkörper in der Heizkörperdatenbank zumindest ein weiterer dem unbekannten Heizkörper hinsichtlich des mindestens einen für den mindestens einen thermischen Kopplungsparameter oder für den jeweiligen thermischen Kopplungsparameter relevanten Formparameters weniger ähnlich ausgeformter Heizkörper ermittelt wird und durch eine Trendanalyse der Formparameterwerte des ähnlichsten Heizkörpers und des mindestens einen weniger ähnlich ausgeformten Heizkörpers und deren thermischen Kopplungsparametern oder jeweiligen thermischen Kopplungsparametern der Erwartungswert des mindestens einen thermischen Kopplungsparameters oder des jeweiligen thermischen Kopplungsparameters des Heizkostenverteilers auf dem unbekannten Heizkörper ermittelt wird. Dadurch wird eine möglichst genaue Ermittlung des Erwartungswertes des mindestens einen thermischen Kopplungsparameters oder des jeweiligen thermischen Kopplungsparameters des Heizkostenverteilers auf dem unbekannten Heizkörper ermöglicht, so dass der Erwartungswert dem tatsächlichen Wert des mindestens einen thermischen Kopplungsparameters oder des jeweiligen thermischen Kopplungsparameters des Heizkostenverteilers auf dem unbekannten Heizkörper zumindest sehr nahe kommt.

In einer Ausführungsform des Verfahrens werden Formparameterwerte mehrerer für den mindestens einen thermischen Kopplungsparameter oder für den jeweiligen thermischen Kopplungsparameter relevanter Formparameter des unbekannten Heizkörpers ermittelt, anhand derer in der Heizkörperdatenbank, für jeden für den mindestens einen thermischen Kopplungsparameter oder für den jeweiligen thermischen Kopplungsparameter relevanten Formparameter, der dem unbekannten Heizkörper hinsichtlich des jeweiligen für den mindestens einen thermischen Kopplungsparameter oder für den jeweiligen thermischen Kopplungsparameter relevanten Formparameters am ähnlichsten ausgeformten Heizkörper ermittelt wird, wobei der Erwartungswert des mindestens einen thermischen Kopplungsparameters oder den jeweiligen thermischen Kopplungsparameters des Heizkostenverteilers auf dem unbekannten Heizkörper mittels einer Trendanalyse aus den thermischen Kopplungsparametern oder den jeweiligen thermischen Kopplungsparametern dieser ähnlichsten Heizkörper und den Abweichungen zwischen den ermittelten Formparameterwerten des unbekannten Heizkörpers und den Formparameterwerten der ähnlichsten Heizkörper ermittelt wird, insbesondere indem zunächst mit jedem der ähnlichsten Heizkörper mittels der Trendanalyse aus dem thermischen Kopplungsparameter oder aus dem jeweiligen thermischen Kopplungsparameter des jeweiligen ähnlichsten Heizkörpers und der Abweichung zwischen dem ermittelten Formparameterwert des unbekannten Heizkörpers und dem Formparameterwert des bezüglich des jeweiligen Formparameters ähnlichsten Heizkörpers ein vorläufiger Erwartungswert ermittelt wird und der Erwartungswert des mindestens einen thermischen Kopplungsparameters oder des jeweiligen thermischen Kopplungsparameters des Heizkostenverteilers auf dem unbekannten Heizkörper aus dem Durchschnitt der vorläufigen Erwartungswerte gebildet wird. Dadurch wird eine nochmalig verbesserte Ermittlung des Erwartungswertes des mindestens einen thermischen Kopplungsparameters oder des jeweiligen thermischen Kopplungsparameters des Heizkostenverteilers auf dem unbekannten Heizkörper ermöglicht, so dass der Erwartungswert einem tatsächlichen Wert des mindestens einem thermischen Kopplungsparameters oder des jeweiligen thermischen Kopplungsparameters des Heizkostenverteilers auf dem unbekannten Heizkörper noch näher kommt.

In einer Ausführungsform des Verfahrens wird ein Formparameterwert des mindestens einen für die Nennleistung relevanten Formparameters des unbekannten Heizkörpers ermittelt, anhand dessen in der Heizkörperdatenbank der dem unbekannten Heizkörper hinsichtlich des mindestens einen für die Nennleistung relevanten Formparameters am ähnlichsten ausgeformte Heizkörper ermittelt wird, wobei
- wenn der unbekannte Heizkörper und der ähnlichste Heizkörper hinsichtlich des mindestens einen für die Nennleistung relevanten Formparameters identisch sind oder eine Abweichung des ermittelten Formparameterwerts des unbekannten Heizkörpers vom Formparameterwert des ähnlichsten Heizkörpers einen vorgegebenen Grenzwert nicht überschreitet, die Nennleistung des ähnlichsten Heizkörpers als Erwartungswert der Nennleistung des unbekannten Heizkörpers ermittelt wird,
- wenn die Abweichung des ermittelten Formparameterwerts des unbekannten Heizkörper vom Formparameterwert des ähnlichsten Heizkörpers den vorgegebenen Grenzwert überschreitet, anhand des Formparameterwertes des mindestens einen für die Nennleistung relevanten Formparameters zumindest ein weiterer dem unbekannten Heizkörper hinsichtlich des mindestens einen für die Nennleistung relevanten Formparameters weniger ähnlich ausgeformter Heizkörper ermittelt wird und durch eine Trendanalyse der Formparameterwerte des ähnlichsten Heizkörpers und des mindestens einen weniger ähnlich ausgeformten Heizkörpers und deren Nennleistungen der Erwartungswert der Nennleistung des unbekannten Heizkörpers ermittelt wird.

In einer Ausführungsform des Verfahrens wird aus mehreren vorläufigen Erwartungswerten der Nennleistung, ermittelt auf der Basis verschiedener relevanter Formparameter, der Erwartungswert der Nennleistung des unbekannten Heizkörpers ermittelt, indem für jeden Formparameter der dem unbekannten Heizkörper bezüglich des jeweiligen Formparameters ähnlichste Heizkörper aus der Heizkörperdatenbank ermittelt und mit dessen Nennleistung, unter Berücksichtigung der Abweichung der Formparameterwerte zwischen dem unbekannten Heizkörper und dem jeweils ähnlichsten Heizkörper, der jeweilige vorläufige Erwartungswert der Nennleistung ermittelt wird und aus diesen vorläufigen Erwartungswerten der Nennleistung dann der Erwartungswert der Nennleistung des unbekannten Heizkörpers, insbesondere mittels Durchschnittsbildung der vorläufigen Erwartungswerte der Nennleistungen, ermittelt wird.

In einer Ausführungsform des Verfahrens wird aus mehreren vorläufigen Erwartungswerten des mindestens einen thermischen Kopplungsparameters des Heizkostenverteilers auf dem unbekannten Heizkörper, ermittelt auf der Basis verschiedener relevanter Formparameter, der Erwartungswert des mindestens einen thermischen Kopplungsparameters des Heizkostenverteilers auf dem unbekannten Heizkörpers ermittelt, indem für jeden Formparameter der dem unbekannten Heizkörper bezüglich des jeweiligen Formparameters ähnlichste Heizkörper aus der Heizkörperdatenbank ermittelt und mit dessen thermischem Kopplungsparameter unter Berücksichtigung der Abweichung der Formparameterwerte zwischen dem unbekannten Heizkörper und dem jeweils ähnlichsten Heizkörper der jeweilige vorläufige Erwartungswert des mindestens einen thermischen Kopplungsparameters des Heizkostenverteilers auf dem unbekannten Heizkörper ermittelt wird und aus diesen vorläufigen Erwartungswerten des mindestens einen thermischen Kopplungsparameters des Heizkostenverteilers auf dem unbekannten Heizkörper dann der Erwartungswert des mindestens einen thermischen Kopplungsparameters des Heizkostenverteilers auf dem unbekannten Heizkörper, insbesondere mittels Durchschnittsbildung der vorläufigen Erwartungswerte des mindestens einen thermischen Kopplungsparameters des Heizkostenverteilers auf dem unbekannten Heizkörper, ermittelt wird.

In einer Ausführungsform des Verfahrens wird der Formparameterwert des mindestens einen Formparameters des unbekannten Heizkörpers mittels eines bildgestützten Verfahrens ermittelt. Dies ermöglicht die Ermittlung des Formparameterwertes auf besonders einfache Weise, beispielsweise durch Fotografieren des Heizkörpers und eine nachfolgende Bildauswertung des Fotos. Alternativ oder zusätzlich wird der Formparameterwert des mindestens einen Formparameters des unbekannten Heizkörpers mittels einer Messvorrichtung, insbesondere mittels eines Oberflächenscanners, insbesondere mittels eines tragbaren Oberflächenscanners, ermittelt, insbesondere durch Vermessung eines Profils des unbekannten Heizkörpers.

In einer Ausführungsform des Verfahrens wird der jeweilige ähnlichste Heizkörper in der Heizkörperdatenbank mittels eines bildgestützten Verfahrens ermittelt. Dies ermöglicht das Auffinden des jeweiligen ähnlichsten Heizkörpers, insbesondere des dem unbekannten Heizkörper auf die oben beschriebene Weise am ähnlichsten ausgeformten Heizkörpers und/oder des mindestens einen weiteren weniger ähnlichen Heizkörpers auf besonders einfache Weise, beispielsweise durch einen Bildvergleich eines Bildes des jeweiligen Heizkörpers in der Heizkörperdatenbank mit einem Bild, beispielsweise einem aufgenommenen Foto, des unbekannten Heizkörpers, insbesondere hinsichtlich des mindestens einen relevanten Formparameters. Es ist davon auszugehen, dass bei mehreren relevanten Formparametern jeweils andere Heizkörper der Datenbank als ähnlich bzw. am ähnlichsten erkannt werden. In einem solchen Fall werden die Nennleistungen und/oder die thermischen Kopplungsparameter bzw. jeweiligen thermischen Kopplungsparameter aller ähnlichen oder ähnlichsten Heizkörper gemittelt. Diese Mittelung kann, insbesondere je nach Formparameter, beispielsweise arithmetisch oder gewichtet durchgeführt werden.

In einem Parametrierverfahren zur Parametrierung eines elektronischen Heizkostenverteilers werden mittels des oben beschriebenen Verfahrens der Erwartungswert der Nennleistung des unbekannten Heizkörpers und der Erwartungswert des mindestens einen thermischen Kopplungsparameters oder der jeweilige Erwartungswert der mehreren thermischen Kopplungsparameter des Heizkörpers auf dem unbekannten Heizkörper ermittelt und mittels der ermittelten Erwartungswerte wird der für den unbekannten Heizkörper vorgesehene elektronische Heizkostenverteiler parametriert. Dadurch werden die oben bereits genannten Vorteile erzielt. Insbesondere ermöglicht das erfindungsgemäße Parametrierverfahren eine vollständige Parametrierung des elektronischen Heizkostenverteilers, die eine plausible Verbrauchswertanzeige sicherstellt. Diese Verbrauchswerte können beispielsweise bei verschiedenen Heizkörpergrößen stark abweichen. So liefert beispielsweise ein großer Heizkörper höhere Verbrauchswerte als ein kleiner Heizkörper.

Ausführungsbeispiele der Erfindung werden im Folgenden anhand von Zeichnungen näher erläutert.

Darin zeigt:

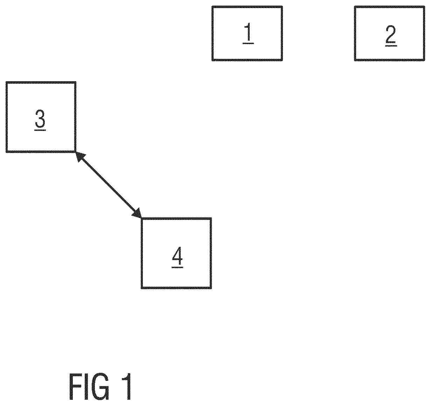

- Figur 1: eine schematische Darstellung eines Verfahrens zur Ermittlung eines Erwartungswertes einer Nennleistung eines unbekannten Heizkörpers und eines Erwartungswertes mindestens eines thermischen Kopplungsparameters eines elektronischen Heizkostenverteilers auf dem unbekannten Heizkörper, insbesondere zur Parametrierung des für den unbekannten Heizkörper vorgesehenen elektronischen Heizkostenverteilers, und eines Parametrierverfahrens zur Parametrierung des elektronischen Heizkostenverteilers,

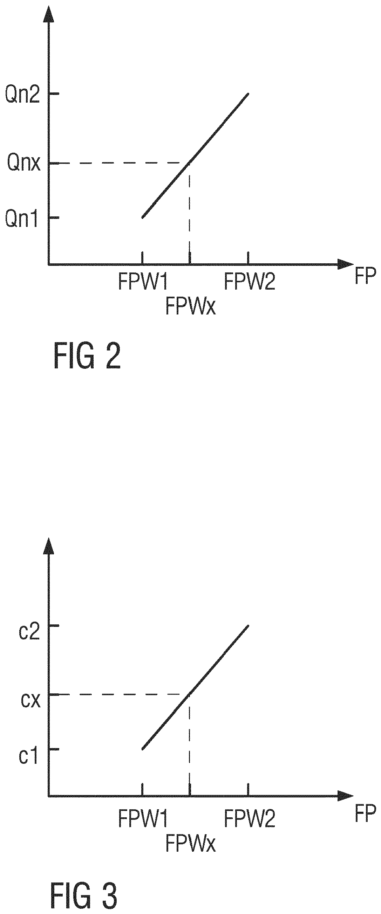

- Figur 2: eine schematische Darstellung des Verfahrens zur Ermittlung des Erwartungswertes der Nennleistung des unbekannten Heizkörpers, insbesondere zur Parametrierung des für den unbekannten Heizkörper vorgesehenen elektronischen Heizkostenverteilers, anhand von Formparameterwerten mindestens eines relevanten Formparameters zweier ähnlicher Heizkörper, die auf der Basis eines Formparameterwertes dieses Formparameters des unbekannten Heizkörpers ermittelt wurden, sowie anhand dieses Formparameterwertes des unbekannten Heizkörpers,
- Figur 3: eine schematische Darstellung des Verfahrens zur Ermittlung des Erwartungswertes des mindestens einen thermischen Kopplungsparameters des Heizkostenverteilers auf dem unbekannten Heizkörper, insbesondere zur Parametrierung des für den unbekannten Heizkörper vorgesehenen elektronischen Heizkostenverteilers, anhand der Formparameterwerte des mindestens einen relevanten Formparameters zweier ähnlicher Heizkörper, die auf der Basis eines Formparameters dieses relevanten Formparameters des unbekannten Heizkörpers ermittelt wurden, sowie anhand des Formparameterwertes des unbekannten Heizkörpers,

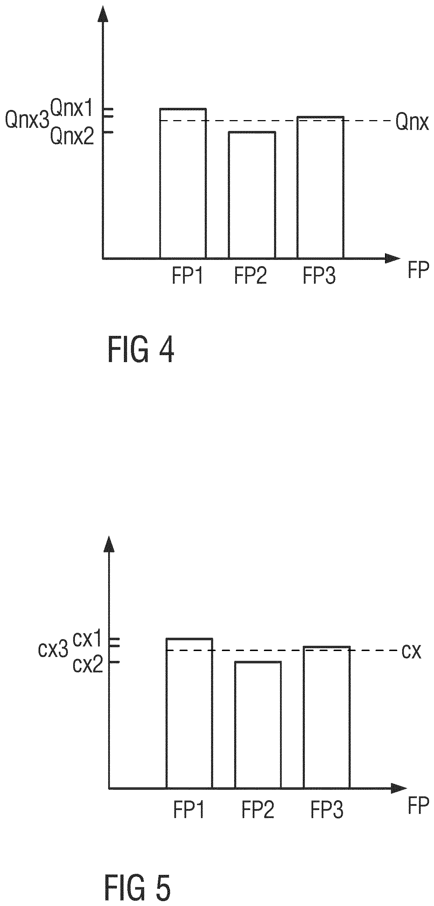

- Figur 4: eine schematische Darstellung des Verfahrens zur Ermittlung des Erwartungswertes der Nennleistung des unbekannten Heizkörpers, insbesondere zur Parametrierung des für den unbekannten Heizkörper vorgesehenen elektronischen Heizkostenverteilers, durch eine Bewertung von mehreren Erwartungswerten der Nennleistung in Abhängigkeit verschiedener für die Nennleistung relevanter Formparameter, und
- Figur 5: eine schematische Darstellung des Verfahrens zur Ermittlung des Erwartungswertes des mindestens einen thermischen Kopplungsparameters des Heizkostenverteilers auf dem unbekannten Heizkörper, insbesondere zur Parametrierung des für den unbekannten Heizkörper vorgesehenen elektronischen Heizkostenverteilers, durch die Bewertung von mehreren Erwartungswerten des mindestens einen thermischen Kopplungsparameters des Heizkostenverteilers auf dem unbekannten Heizkörper in Abhängigkeit verschiedener für den mindestens einen thermischen Kopplungsparameter relevanten Formparameter.

Einander entsprechende Teile sind in allen Figuren mit den gleichen Bezugszeichen versehen.

**Figur 1** zeigt eine schematische Darstellung eines Verfahrens zur Ermittlung eines Erwartungswertes einer Nennleistung Qnx, d. h. einer Heiznennleistung, und eines Erwartungswertes mindestens eines thermischen Kopplungsparameters cx eines elektronischen Heizkostenverteilers 2 auf einem unbekannten Heizkörper 1. Dies dient insbesondere zur Parametrierung des elektronischen Heizkostenverteilers 2, welcher für diesen unbekannten Heizkörper 1 vorgesehen ist, d. h. in einem Parametrierverfahren zur Parametrierung des für den unbekannten Heizkörper 1 vorgesehenen, beispielsweise an diesem bereits angeordneten oder, wie im dargestellten Beispiel, noch anzuordnenden, elektronischen Heizkostenverteilers 2 werden der Erwartungswert der Nennleistung Qnx und der Erwartungswert des mindestens einen thermischen Kopplungsparameters cx des Heizkostenverteilers 2 auf dem unbekannten Heizkörpers 1 ermittelt und mit diesen Erwartungswerten wird der für den unbekannten Heizkörper 1 vorgesehene elektronische Heizkostenverteiler 2 parametriert.

In dem Verfahren werden der Erwartungswert der Nennleistung Qnx und der Erwartungswert des mindestens einen thermischen Kopplungsparameters cx des Heizkostenverteilers 2 auf dem unbekannten Heizkörper 1 anhand einer Heizkörperdatenbank 3 ermittelt, die eine Mehrzahl verschiedener Heizkörper mit einer jeweiligen Nennleistung und einem jeweiligen thermischen Kopplungsparameter sowie mindestens einen Formparameter FP relevant für die Nennleistung und mindestens einen weiteren Formparameter FP relevant für mindestens einen thermischen Kopplungsparameter enthält, insbesondere für einen thermischen Kopplungsparameter für Zweifühlermessverfahren und/oder für einen thermischen Kopplungsparameter für Einfühlermessverfahren.

In Figur 1 ist hierzu eine Ermittlungseinheit 4 dargestellt, welche hierzu auf die Heizkörperdatenbank 3 zugreift. Diese Ermittlungseinheit 4 kann beispielsweise ein tragbares Gerät sein, zum Beispiel ein tragbarer Computer, beispielsweise ein Laptop oder Notebook, ein Tabletcomputer oder ein Mobiltelefon, insbesondere ein so genanntes Smartphone. Dadurch kann diese Ermittlung vor Ort durchgeführt werden, d. h. an einem jeweiligen Installationsort des Heizkörpers 1.

Beispielsweise enthält die Heizkörperdatenbank 3 für jeden Heizkörper Formparameterwerte, mindestens einen für die Nennleistung und/oder den mindestens einen thermischen Kopplungsparameter relevant, so dass anhand des relevanten Formparameterwertes mindestens der dem Heizkörper 1 ähnlichste Heizkörper in der Heizkörperdatenbank 3 ermittelt werden kann, wobei anhand dessen Nennleistung Qn1 der Erwartungswert der Nennleistung Qnx des unbekannten Heizkörpers 1 ermittelt wird und/oder anhand dessen thermischem Kopplungsparameter c1 der Erwartungswert des mindestens einen thermischen Kopplungsparameters cx des Heizkostenverteilers 2 auf dem unbekannten Heizkörpers 1 ermittelt wird.

Beispielsweise wird der Erwartungswert der Nennleistung Qnx des unbekannten Heizkörpers 1 ermittelt, indem ein Formparameterwert FPWx des mindestens einen für die Nennleistung relevanten Formparameters FP des unbekannten Heizkörpers 1 ermittelt wird, anhand dessen dann in der Heizkörperdatenbank 3 der dem unbekannten Heizkörper 1 hinsichtlich des mindestens einen für die Nennleistung relevanten Formparameters FP am ähnlichsten ausgeformte Heizkörper ermittelt wird. D. h. es wird beispielsweise derjenige Heizkörper ermittelt, dessen Formparameterwert FPW1 am geringsten vom ermittelten Formparameterwert FPWx des unbekannten Heizkörpers 1 abweicht.

Der Erwartungswert der Nennleistung Qnx des unbekannten Heizkörpers 1 wird dann mittels einer Trendanalyse aus der Nennleistung Qn1 dieses Heizkörpers und einer Abweichung zwischen dem ermittelten Formparameterwert FPWx des unbekannten Heizkörpers 1 und dem Formparameterwert FPW1 des ähnlichsten Heizkörpers ermittelt.

Beispielsweise wird der Erwartungswert des mindestens einen thermischen Kopplungsparameters cx des Heizkostenverteilers 2 auf dem unbekannten Heizkörper 1 ermittelt, indem ein Formparameterwert FPWx des mindestens einen für den mindestens einen thermischen Kopplungsparameter cx relevanten Formparameters FP des Heizkostenverteilers 3 auf dem unbekannten Heizkörpers 1 ermittelt wird. Anhand dessen wird dann in der Heizkörperdatenbank 3 der dem unbekannten Heizkörper 1 hinsichtlich des mindestens einen für den mindestens einen thermischen Kopplungsparameter relevanten Formparameters FP am ähnlichsten ausgeformte Heizkörper ermittelt, d. h. es wird beispielsweise derjenige Heizkörper als ähnlichster Heizkörper ermittelt, dessen Formparameterwert FPW1 am geringsten vom ermittelten Formparameterwert FPWx des unbekannten Heizkörpers 1 abweicht.

Wenn der unbekannte Heizkörper 1 und der ähnlichste Heizkörper hinsichtlich des mindestens einen für den mindestens einen thermischen Kopplungsparameter relevanten Formparameters FP identisch sind oder eine Abweichung des ermittelten Formparameterwerts FPWx des unbekannten Heizkörpers 1 vom Formparameterwert FPW1 des ähnlichsten Heizkörpers einen vorgegebenen Grenzwert nicht überschreitet, wird der mindestens eine thermische Kopplungsparameter c1 des Heizkostenverteilers 3 auf dem ähnlichsten Heizkörper als Erwartungswert des mindestens einen thermischen Kopplungsparameters cx des Heizkostenverteilers 3 auf dem unbekannten Heizkörper 1 ermittelt.

Wenn die Abweichung des ermittelten Formparameterwerts FPWx des unbekannten Heizkörpers 1 vom Formparameterwert FPW1 des ähnlichsten Heizkörpers den vorgegebenen Grenzwert überschreitet, wird, wie in **Figur 3** gezeigt, anhand des Formparameterwertes FPWx des mindestens einen für den mindestens einen thermischen Kopplungsparameter des Heizkostenverteilers 2 relevanten Formparameters FP des unbekannten Heizkörpers 1 in der Heizkörperdatenbank 3 zumindest ein weiterer dem unbekannten Heizkörper 1 hinsichtlich des mindestens einen für den mindestens einen thermischen Kopplungsparameter des Heizkostenverteilers 2 relevanten Formparameters FP weniger ähnlich ausgeformter Heizkörper ermittelt, d. h. beispielsweise ein weiterer weniger ähnlicher Heizkörper, dessen Formparameterwert FPW2 etwas mehr vom ermittelten Formparameterwert FPWx des unbekannten Heizkörpers 1 abweicht als der Formparameterwert FPW1 des anderen ermittelten ähnlichsten Heizkörpers. Durch eine Trendanalyse der Formparameterwerte FPW1 und FPW2 dieser ermittelten ähnlichen Heizkörper und von deren thermischen Kopplungsparametern c1 und c2 wird dann der Erwartungswert des mindestens einen thermischen Kopplungsparameters cx des Heizkostenverteilers 3 auf dem unbekannten Heizkörper 1 ermittelt.

Das Gleiche kann auch für den Erwartungswert der Nennleistung durchgeführt werden, d. h. auch hier kann ein Grenzwert vorgegeben werden. Wenn die Abweichung des ermittelten Formparameterwerts FPWx des unbekannten Heizkörpers 1 vom Formparameterwert FPW1 des ähnlichsten Heizkörpers diesen vorgegebenen Grenzwert überschreitet, wird, wie in **Figur 2** gezeigt, anhand des Formparameterwertes FPWx des mindestens einen für die Nennleistung relevanten Formparameters FP des unbekannten Heizkörpers 1 in der Heizkörperdatenbank 3 zumindest ein weiterer dem unbekannten Heizkörper 1 hinsichtlich des mindestens einen für die Nennleistung relevanten Formparameters FP weniger ähnlich ausgeformter Heizkörper ermittelt, d. h. beispielsweise ein weiterer weniger ähnlicher Heizkörper, dessen Formparameterwert FPW2 etwas mehr vom ermittelten Formparameterwert FPWx des unbekannten Heizkörpers 1 abweicht als der Formparameterwert FPW1 des anderen ermittelten ähnlichsten Heizkörpers. Durch eine Trendanalyse der Formparameterwerte FPW1 und FPW2 dieser ermittelten ähnlichen Heizkörper und von deren Nennleistungen wird dann der Erwartungswert der Nennleistung Qn1, Qn2 des unbekannten Heizkörpers 1 ermittelt.

Beispielsweise wird der Formparameterwert FPWx des mindestens einen relevanten Formparameters FP mittels eines bildgestützten Verfahrens ermittelt. Dies ermöglicht diese Ermittlung des Formparameterwertes FPWx auf besonders einfache Weise, beispielsweise durch Fotografieren des unbekannten Heizkörpers 1 und eine nachfolgende Bildauswertung des Fotos. Dies kann beispielsweise mittels der Ermittlungseinheit 4 erfolgen, welche hierzu beispielsweise mindestens eine Kamera aufweist.

Beispielsweise wird der jeweilige ähnliche Heizkörper in der Heizkörperdatenbank 3 mittels eines bildgestützten Verfahrens ermittelt. Dies ermöglicht das Auffinden des jeweiligen ähnlichen Heizkörpers, insbesondere des dem unbekannten Heizkörper 1 auf die oben beschriebene Weise am ähnlichsten ausgeformten Heizkörpers und/oder des mindestens einen weiteren weniger ähnlichen Heizkörpers, auf besonders einfache Weise, beispielsweise durch einen Bildvergleich eines Bildes des jeweiligen Heizkörpers in der Heizkörperdatenbank 3 mit einem Bild, beispielsweise einem aufgenommenen Foto, des unbekannten Heizkörpers 1.

Beispielsweise wird für die oben beschriebene Vorgehensweise nicht nur ein Formparameter FP verwendet, sondern es werden mehrere Formparameter FP verwendet. Als Formparameter FP kommen beispielsweise ein Heizkörpertyp (beispielsweise Plattenheizkörper, Gliederheizkörper, Badheizkörper usw.), eine Heizkörperlänge, eine Heizkörperbreite, eine Heizkörpertiefe, eine Heizkörperoberflächenform, ein Heizkörperoberflächenprofil, eine Heizkörperflächenanzahl und/oder andere Formparameter in Betracht. Die Verwendung mehrerer Formparameter FP ermöglicht eine bessere Ermittlung der Erwartungswerte der Nennleistung und/oder des mindestens einen thermischen Kopplungsparameters.

Das Verfahren zur Ermittlung der Erwartungswerte der Nennleistung Qnx und des mindestens einen thermischen Kopplungsparameters cx für den Heizkostenverteiler 2 auf dem unbekannten Heizkörper 1, erfolgt somit auf der Basis der Heizkörperdatenbank 3 vorteilhafterweise mit einer großen Anzahl verschiedener, relevanter Heizkörpermodelle, die möglichst das gesamte Heizkörper-Modellspektrum abdecken. Zu jedem in der Heizkörperdatenbank 3 gelisteten Modell, d. h. zu jedem Heizkörper, sind vorteilhafterweise Formparameterwerte vorteilhafterweise mehrerer Formparameter FP bekannt, wobei diese Formparameter FP beispielsweise Formen und Maße beschreiben, d. h. unter Formparametern FP sind auch Maßparameter zu verstehen.

Des Weiteren sind von diesen Heizkörpern vorteilhafterweise auch deren Nennleistungswerte, beispielsweise in Abhängigkeit der Formparameter FP und/oder Maßparameter, sowie vorteilhafterweise deren thermische Kopplungsparameter des Heizkostenverteilers 2 bekannt.

Für den unbekannten Heizköper 1 wird, auf der Basis der Formparameter FP, beispielsweise mit einem bildgestützten Verfahren, zumindest ein ähnliches Modell, d. h. ein ähnlicher Heizkörper, selektiert. Auf der Basis der Formparameterwerte FPW1 des ähnlichsten Heizkörpers wird durch Trendanalyse, zumindest eines Formparameters FP, der Erwartungswert der Nennleistung Qnx des unbekannten Heizkörpers 1 ermittelt.

Die Ermittlung des Erwartungswertes des relevanten thermischen Kopplungsparameters cx des Heizkostenverteilers auf dem unbekannten Heizkörper 1 erfolgt, wie oben bereits beschrieben, vorteilhafterweise ebenfalls auf der Basis des ermittelten ähnlichsten Heizkörpermodells, d. h. des ähnlichsten Heizkörpers. Hierzu werden die für die thermische Kopplung relevanten Formparameter FP analysiert. Sind deren Werte identisch oder im Rahmen einer vorgegebenen Maßunsicherheit nahezu identisch zum unbekannten Heizkörper 1, so wird der Erwartungswert des mindestens einen thermischen Kopplungsparameters cx des Heizkostenverteilers 2 auf dem unbekannten Heizkörpers 1 vorteilhafterweise mit dem des ähnlichsten Modells, d. h. des ähnlichsten Heizkörpers, als übereinstimmend angenommen und als Erwartungswert ermittelt.

Sind die für die thermische Kopplung maßgeblichen Maße, d. h. Formparameterwerte FP, deutlich unterschiedlich, so wird zumindest ein weiteres, weniger ähnliches Heizköpermodell, d. h. ein entsprechender weniger ähnlicher Heizkörper, in der Heizkörperdatenbank 3, mit abweichenden für die thermische Kopplung relevanten Formparameterwerten FPW2, insbesondere Maßparameterwerten, ermittelt. Durch eine Trendanalyse, in **Figur 3** gezeigt, des bzw. der relevanten Formparameterwerte FPW1 und FPW2 der beiden ähnlichen Heizkörpermodelle wird anschließend der Erwartungswert des mindestens einen thermischen Kopplungsparameters cx des Heizkostenverteilers auf dem unbekannten Heizkörpers 1 ermittelt.

In **Figur 4** ist dargestellt, wie aus mehreren vorläufigen Erwartungswerten der Nennleistung Qnx1, Qnx2 und Qnx3, ermittelt auf der Basis verschiedener relevanter Formparameter FP1, PF2 und FP3, der Erwartungswert der Nennleistung Qnx des unbekannten Heizkörpers 1 ermittelt werden kann. Hierzu wird für jeden Formparameter FP1, FP2, FP3 der dem unbekannten Heizkörper 1 bezüglich des jeweiligen Formparameters FP1, FP2, FP3 ähnlichste Heizkörper aus der Heizkörperdatenbank 3 ermittelt und mit dessen Nennleistung unter Berücksichtigung der Abweichung der Formparameterwerte zwischen dem unbekannten Heizkörper 1 und dem jeweils ähnlichsten Heizkörper der jeweilige vorläufige Erwartungswert der Nennleistung Qnx1, Qnx2 und Qnx3 ermittelt. Aus diesen vorläufigen Erwartungswerten der Nennleistung Qnx1, Qnx2 und Qnx3 wird dann der Erwartungswert der Nennleistung Qnx des unbekannten Heizkörpers 1 beispielsweise mittels Durchschnittsbildung der vorläufigen Erwartungswerte der Nennleistung Qnx1, Qnx2 und Qnx3 ermittelt.

In **Figur 5** ist dargestellt, wie aus mehreren vorläufigen Erwartungswerten des mindestens einen thermischen Kopplungsparameters cx1, cx2 und cx3 des Heizkostenverteilers 2 auf dem unbekannten Heizkörper 1, ermittelt auf der Basis verschiedener relevanter Formparameter FP1, PF2 und FP3, der Erwartungswert des mindestens einen thermischen Kopplungsparameters cx des Heizkostenverteilers 2 auf dem unbekannten Heizkörpers 1 ermittelt werden kann. Hierzu wird für jeden Formparameter FP1, FP2, FP3 der dem unbekannten Heizkörper 1 bezüglich des jeweiligen Formparameters FP1, FP2, FP3 ähnlichste Heizkörper aus der Heizkörperdatenbank 3 ermittelt und mit dessen thermischem Kopplungsparameter unter Berücksichtigung der Abweichung der Formparameterwerte zwischen dem unbekannten Heizkörper 1 und dem jeweils ähnlichsten Heizkörper der jeweilige vorläufige Erwartungswert des mindestens einen thermischen Kopplungsparameters cx1, cx2 und cx3 des Heizkostenverteilers 2 auf dem unbekannten Heizkörper 1 ermittelt. Aus diesen vorläufigen Erwartungswerten des mindestens einen thermischen Kopplungsparameters cx1, cx2 und cx3 des Heizkostenverteilers 2 auf dem unbekannten Heizkörper 1 wird dann der Erwartungswert des mindestens einen thermischen Kopplungsparameters cx des Heizkostenverteilers 2 auf dem unbekannten Heizkörper 1 beispielsweise mittels Durchschnittsbildung der vorläufigen Erwartungswerte des mindestens einen thermischen Kopplungsparameters cx1, cx2 und cx3 des Heizkostenverteilers 2 auf dem unbekannten Heizkörper 1 ermittelt.

### BEZUGSZEICHENLISTE

- 1: unbekannter Heizkörper
- 2: elektronischer Heizkostenverteiler
- 3: Heizkörperdatenbank
- 4: Ermittlungseinheit
- FP: Formparameter
- FP1: erster relevanter Formparameter
- FP2: zweiter relevanter Formparameter
- FP3: dritter relevanter Formparameter
- FPWx: Formparameterwert des unbekannten Heizkörpers
- FPW1: Formparameterwert des ähnlichsten Heizkörpers
- FPW2: Formparameterwert eines weiteren Heizkörpers
- cx: Erwartungswert eines thermischen Kopplungsparameters eines Heizkostenverteilers auf einem unbekannten Heizkörper
- cx1: vorläufiger Erwartungswert eines thermischen Kopplungsparameters eines Heizkostenverteilers auf einem unbekannten Heizkörper auf Basis eines ersten relevanten Formparameters
- cx2: vorläufiger Erwartungswert eines thermischen Kopplungsparameters eines Heizkostenverteilers auf einem unbekannten Heizkörper auf Basis eines zweiten relevanten Formparameters
- cx3: vorläufiger Erwartungswert eines thermischen Kopplungsparameters eines Heizkostenverteilers auf einem unbekannten Heizkörper auf Basis eines dritten relevanten Formparameters
- c1: thermischer Kopplungsparameter des Heizkostenverteilers auf dem ähnlichsten Heizkörper
- c2: thermischer Kopplungsparameter des Heizkostenverteilers auf einem weiteren Heizkörper
- Qnx: Erwartungswert einer Nennleistung eines unbekannten Heizkörpers
- Qnx1: vorläufiger Erwartungswert einer Nennleistung eines unbekannten Heizkörpers auf Basis eines ersten relevanten Formparameters
- Qnx2: vorläufiger Erwartungswert einer Nennleistung eines unbekannten Heizkörpers auf Basis eines ersten relevanten Formparameters
- Qnx3: Erwartungswert einer Nennleistung eines unbekannten Heizkörpers auf Basis eines ersten relevanten Formparameters
- Qn1: Nennleistung des ähnlichsten Heizkörpers
- Qn2: Nennleistung des weniger ähnlichen Heizkörpers

## Patentansprüche

1. Verfahren zur Ermittlung eines als Schätzwert ausgebildeten Erwartungswertes einer Nennleistung (Qnx) eines unbekannten Heizkörpers (1) und eines als Schätzwert ausgebildeten Erwartungswertes mindestens eines thermischen Kopplungsparameters (cx) eines elektronischen Heizkostenverteilers (2) auf dem unbekannten Heizkörper (1), insbesondere zur Parametrierung des für den unbekannten Heizkörper (1) vorgesehenen elektronischen Heizkostenverteilers (2), wobei der Erwartungswert der Nennleistung (Qnx) des unbekannten Heizkörpers (1) und der Erwartungswert des mindestens einen thermischen Kopplungsparameters (cx) des Heizkostenverteilers (2) auf dem unbekannten Heizkörper (1) mittels einer Ermittlungseinheit (4) anhand einer Heizkörperdatenbank (3) ermittelt werden, die eine Mehrzahl verschiedener Heizkörper mit einem jeweiligen Nennwert der Nennleistung und einem jeweiligen Wert des mindestens einen thermischen Kopplungsparameters des Heizkostenverteilers (2) auf dem jeweiligen Heizkörper enthält,
wobei die Heizkörperdatenbank (3) für jeden Heizkörper eine Mehrzahl von Formparametern (FP) enthält, von denen mindestens jeweils einer relevant für die Nennleistung des jeweiligen Heizkörpers und/oder für den mindestens einen thermischen Kopplungsparameter des Heizkostenverteilers (2) auf dem jeweiligen Heizkörper ist, wobei anhand eines ermittelten Formparameterwertes (FPWx) des mindestens einen für die Nennleistung und/oder für den mindestens einen thermischen Kopplungsparameter des Heizkostenverteilers (2) auf dem unbekannten Heizkörper (1) relevanten Formparameters (FP) des unbekannten Heizkörpers (1) mindestens der dem unbekannten Heizkörper (1) ähnlichste Heizkörper in der Heizkörperdatenbank (3) ermittelt wird, wobei anhand dessen Nennleistung (Qn1) der Erwartungswert der Nennleistung (Qnx) des unbekannten Heizkörpers (1) ermittelt wird und/oder anhand dessen mindestens einen thermischem Kopplungsparameter (c1) des Heizkostenverteilers (2) auf dem Heizkörper der Erwartungswert des mindestens einen thermischen Kopplungsparameters (cx) des Heizkostenverteilers (2) auf dem unbekannten Heizkörper (1) ermittelt wird.

2. Verfahren nach Anspruch 1,
wobei ein Formparameterwert (FPWx) des mindestens einen für die Nennleistung relevanten Formparameters (FP) des unbekannten Heizkörpers (1) ermittelt wird, anhand dessen in der Heizkörperdatenbank (3) der dem unbekannten Heizkörper (1) hinsichtlich des mindestens einen für die Nennleistung relevanten Formparameters (FP) am ähnlichsten ausgeformte Heizkörper ermittelt wird, wobei der Erwartungswert der Nennleistung (Qnx) des unbekannten Heizkörpers (1) mittels einer Trendanalyse aus der Nennleistung (Qn1) dieses ähnlichsten Heizkörpers und einer Abweichung zwischen dem ermittelten Formparameterwert (FPWx) des unbekannten Heizkörpers (1) und dem Formparameterwert (FPW1) des ähnlichsten Heizkörpers ermittelt wird.

3. Verfahren nach einem der vorhergehenden Ansprüche,
wobei ein Formparameterwert (FPWx) des mindestens einen für den mindestens einen thermischen Kopplungsparameter relevanten Formparameters (FP) des unbekannten Heizkörpers (1) ermittelt wird, anhand dessen in der Heizkörperdatenbank (3) der dem unbekannten Heizkörper (1) hinsichtlich des mindestens einen für den mindestens einen thermischen Kopplungsparameter relevanten Formparameters (FP) am ähnlichsten ausgeformte Heizkörper ermittelt wird, wobei
- wenn der unbekannte Heizkörper (1) und der ähnlichste Heizkörper hinsichtlich des mindestens einen für den mindestens einen thermischen Kopplungsparameter relevanten Formparameters (FP) identisch sind oder eine Abweichung des ermittelten Formparameterwerts (FPWx) des unbekannten Heizkörpers (1) vom Formparameterwert (FPW1) des ähnlichsten Heizkörpers einen vorgegebenen Grenzwert nicht überschreitet, der mindestens eine thermische Kopplungsparameter (c1) des Heizkostenverteilers (2) auf dem ähnlichsten Heizkörper als Erwartungswert des mindestens einen thermischen Kopplungsparameters (cx) des Heizkostenverteilers (2) auf dem unbekannten Heizkörper (1) ermittelt wird,
- wenn die Abweichung des ermittelten Formparameterwerts (FPWx) des unbekannten Heizkörper (1) vom Formparameterwert (FPW1) des ähnlichsten Heizkörpers den vorgegebenen Grenzwert überschreitet, anhand des Formparameterwertes (FPWx) des mindestens einen für den mindestens einen thermischen Kopplungsparameter relevanten Formparameters (FP) des Heizkostenverteilers (2) auf dem unbekannten Heizkörper (1) in der Heizkörperdatenbank (3) zumindest ein weiterer dem unbekannten Heizkörper (1) hinsichtlich des mindestens einen für den mindestens einen thermischen Kopplungsparameter relevanten Formparameters (FP) weniger ähnlich ausgeformter Heizkörper ermittelt wird und durch eine Trendanalyse der Formparameterwerte (FPW1 und FPW2) des ähnlichsten Heizkörpers und des mindestens einen weniger ähnlich ausgeformten Heizkörpers und deren thermischen Kopplungsparametern (c1 und c2) der Erwartungswert des mindestens einen thermischen Kopplungsparameters (cx) des Heizkostenverteilers (2) auf dem unbekannten Heizkörpers (1) ermittelt wird.

4. Verfahren nach einem der vorhergehenden Ansprüche,
wobei ein Formparameterwert (FPWx) des mindestens einen für die Nennleistung relevanten Formparameters (FP) des unbekannten Heizkörpers (1) ermittelt wird, anhand dessen in der Heizkörperdatenbank (3) der dem unbekannten Heizkörper (1) hinsichtlich des mindestens einen für die Nennleistung relevanten Formparameters (FP) am ähnlichsten ausgeformte Heizkörper ermittelt wird, wobei
- wenn der unbekannte Heizkörper (1) und der ähnlichste Heizkörper hinsichtlich des mindestens einen für die Nennleistung relevanten Formparameters (FP) identisch sind oder eine Abweichung des ermittelten Formparameterwerts (FPWx) des unbekannten Heizkörpers (1) vom Formparameterwert (FPW1) des ähnlichsten Heizkörpers einen vorgegebenen Grenzwert nicht überschreitet, die Nennleistung (Qn1) des ähnlichsten Heizkörpers als Erwartungswert der Nennleistung des unbekannten Heizkörpers (Qnx) ermittelt wird,
- wenn die Abweichung des ermittelten Formparameterwerts (FPWx) des unbekannten Heizkörper (1) vom Formparameterwert (FPW1) des ähnlichsten Heizkörpers den vorgegebenen Grenzwert überschreitet, anhand des Formparameterwertes (FPWx) des mindestens einen für die Nennleistung relevanten Formparameters (FP) zumindest ein weiterer dem unbekannten Heizkörper (1) hinsichtlich des mindestens einen für die Nennleistung relevanten Formparameters (FP) weniger ähnlich ausgeformter Heizkörper ermittelt wird und durch eine Trendanalyse der Formparameterwerte (FPW1 und FPW2) des ähnlichsten Heizkörpers und des mindestens einen weniger ähnlich ausgeformten Heizkörpers und deren Nennleistungen (Qn1 und Qn2) der Erwartungswert der Nennleistung (Qnx) des unbekannten Heizkörpers (1) ermittelt wird.

5. Verfahren nach einem der vorhergehenden Ansprüche,
wobei aus mehreren vorläufigen Erwartungswerten der Nennleistung (Qnx1, Qnx2 und Qnx3), ermittelt auf der Basis verschiedener relevanter Formparameter (FP1, PF2 und FP3), der Erwartungswert der Nennleistung (Qnx) des unbekannten Heizkörpers (1) ermittelt wird, indem für jeden Formparameter (FP1, FP2, FP3) der dem unbekannten Heizkörper (1) bezüglich des jeweiligen Formparameters (FP1, FP2, FP3) ähnlichste Heizkörper aus der Heizkörperdatenbank (3) ermittelt und mit dessen Nennleistung, unter Berücksichtigung der Abweichung der Formparameterwerte zwischen dem unbekannten Heizkörper (1) und dem jeweils ähnlichsten Heizkörper, der jeweilige vorläufige Erwartungswert der Nennleistung (Qnx1, Qnx2 und Qnx3) ermittelt wird und aus diesen vorläufigen Erwartungswerten der Nennleistung (Qnx1, Qnx2 und Qnx3) dann der Erwartungswert der Nennleistung (Qnx) des unbekannten Heizkörpers (1), insbesondere mittels Durchschnittsbildung der vorläufigen Erwartungswerte der Nennleistungen (Qnx1, Qnx2 und Qnx3), ermittelt wird.

6. Verfahren nach einem der vorhergehenden Ansprüche, wobei aus mehreren vorläufigen Erwartungswerten des mindestens einen thermischen Kopplungsparameters (cx1, cx2 und cx3) des Heizkostenverteilers (2) auf dem unbekannten Heizkörper (1), ermittelt auf der Basis verschiedener relevanter Formparameter (FP1, PF2 und FP3), der Erwartungswert des mindestens einen thermischen Kopplungsparameters (cx) des Heizkostenverteilers (2) auf dem unbekannten Heizkörpers (1) ermittelt wird, indem für jeden Formparameter (FP1, FP2, FP3) der dem unbekannten Heizkörper (1) bezüglich des jeweiligen Formparameters (FP1, FP2, FP3) ähnlichste Heizkörper aus der Heizkörperdatenbank (3) ermittelt und mit dessen thermischem Kopplungsparameter unter Berücksichtigung der Abweichung der Formparameterwerte zwischen dem unbekannten Heizkörper (1) und dem jeweils ähnlichsten Heizkörper der jeweilige vorläufige Erwartungswert des mindestens einen thermischen Kopplungsparameters (cx1, cx2 und cx3) des Heizkostenverteilers (2) auf dem unbekannten Heizkörper (1) ermittelt wird und aus diesen vorläufigen Erwartungswerten des mindestens einen thermischen Kopplungsparameters (cx1, cx2 und cx3) des Heizkostenverteilers (2) auf dem unbekannten Heizkörper (1) dann der Erwartungswert des mindestens einen thermischen Kopplungsparameters (cx) des Heizkostenverteilers (2) auf dem unbekannten Heizkörper (1), insbesondere mittels Durchschnittsbildung der vorläufigen Erwartungswerte des mindestens einen thermischen Kopplungsparameters (cx1, cx2 und cx3) des Heizkostenverteilers (2) auf dem unbekannten Heizkörper (1), ermittelt wird.

7. Verfahren nach einem der vorhergehenden Ansprüche,
wobei der Formparameterwert (FPWx) des mindestens einen Formparameters (FP) des unbekannten Heizkörpers (1) mittels eines bildgestützten Verfahrens ermittelt wird.

8. Verfahren nach einem der vorhergehenden Ansprüche,
wobei der jeweilige ähnlichste Heizkörper in der Heizkörperdatenbank (3) mittels eines bildgestützten Verfahrens ermittelt wird, durch einen Bildvergleich eines Bildes des jeweiligen Heizkörpers in der Heizkörperdatenbank (3) mit einem Bild des unbekannten Heizkörpers (1).

9. Parametrierverfahren zur Parametrierung eines elektronischen Heizkostenverteilers (2), wobei mittels eines Verfahrens nach einem der vorhergehenden Ansprüche der Erwartungswert der Nennleistung (Qnx) des unbekannten Heizkörpers (2) und der Erwartungswert des mindestens einen thermischen Kopplungsparameters (cx) des Heizkostenverteilers (2) auf dem unbekannten Heizkörper (1) ermittelt werden und mittels der ermittelten Erwartungswerte der für den unbekannten Heizkörper (1) vorgesehene elektronische Heizkostenverteiler (2) parametriert wird.

## Claims

1. Method for determining an expected value, formed as an estimated value, of a nominal output (Qnx) of an unknown radiator (1) and an expected value, formed as an estimated value, of at least one thermal coupling parameter (cx) of an electronic heating cost distributor (2) on the unknown radiator (1), in particular for parameterizing the electronic heating cost distributor (2) provided for the unknown radiator (1), wherein the expected value of the nominal output (Qnx) of the unknown radiator (1) and the expected value of the at least one thermal coupling parameter (cx) of the heating cost distributor (2) on the unknown radiator (1) are determined by means of a determining unit (4) on the basis of a radiator database (3), which contains a plurality of different heating bodies with a respective nominal value of the nominal output and a respective value of the at least one thermal coupling parameter of the heating cost distributor (2) on the respective radiator, wherein the radiator database (3) contains for each radiator a plurality of form parameters (FP), at least one of which in each case is relevant to the nominal output of the respective radiator and/or to the at least one thermal coupling parameter of the heating cost distributor (2) on the respective radiator, wherein, on the basis of a determined form parameter value (FPWx) of the at least one form parameter (FP) of the unknown radiator (1) that is relevant to the nominal output and/or to the at least one thermal coupling parameter of the heating cost distributor (2) on the unknown radiator (1), at least the radiator that is most similar to the unknown radiator (1) is determined in the radiator database (3), wherein, on the basis of the nominal output (Qn1) of this most similar radiator, the expected value of the nominal output (Qnx) of the unknown radiator (1) is determined and/or, on the basis of the at least one thermal coupling parameter (c1) of the heating cost distributor (2) on this most similar radiator, the expected value of the at least one thermal coupling parameter (cx) of the heating cost distributor (2) on the unknown radiator (1) is determined.

2. Method according to Claim 1,
wherein a form parameter value (FPWx) of the at least one form parameter (FP) of the unknown radiator (1) that is relevant to the nominal output is determined, on the basis of which the radiator formed most similarly to the unknown radiator (1) with regard to the at least one form parameter (FP) relevant to the nominal output is determined in the radiator database (3), wherein the expected value of the nominal output (Qnx) of the unknown radiator (1) is determined by means of a trend analysis from the nominal output (Qn1) of this most similar radiator and a deviation between the determined form parameter value (FPWx) of the unknown radiator (1) and the form parameter value (FPW1) of the most similar radiator.

3. Method according to one of the preceding claims,
wherein a form parameter value (FPWx) of the at least one form parameter (FP) of the unknown radiator (1) that is relevant to the at least one thermal coupling parameter is determined, on the basis of which the radiator formed most similarly to the unknown radiator (1) with regard to the at least one form parameter (FP) relevant to the at least one thermal coupling parameter is determined in the radiator database (3), wherein
- if the unknown radiator (1) and the most similar radiator are identical with regard to the at least one form parameter (FP) relevant to the at least one thermal coupling parameter or a deviation of the determined form parameter value (FPWx) of the unknown radiator (1) from the form parameter value (FPW1) of the most similar radiator does not exceed a predetermined limit value, the at least one thermal coupling parameter (c1) of the heating cost distributor (2) on the most similar radiator is determined as the expected value of the at least one thermal coupling parameter (cx) of the heating cost distributor (2) on the unknown radiator (1),
- if the deviation of the determined form parameter value (FPWx) of the unknown radiator (1) from the form parameter value (FPW1) of the most similar radiator exceeds the predetermined limit value, at least one further radiator formed less similarly to the unknown radiator (1) with regard to the at least one form parameter (FP) relevant to the at least one thermal coupling parameter is determined on the basis of the form parameter value (FPWx) of the at least one form parameter (FP), relevant to the at least one thermal coupling parameter, of the heating cost distributor (2) on the unknown radiator (1) in the radiator database (3), and the expected value of the at least one thermal coupling parameter (cx) of the heating cost distributor (2) on the unknown radiator (1) is determined by a trend analysis of the form parameter values (FPW1 and FPW2) of the most similar radiator and of the at least one less similarly formed radiator and their thermal coupling parameters (c1 and c2).

4. Method according to one of the preceding claims,
wherein a form parameter value (FPWx) of the at least one form parameter (FP) of the unknown radiator (1) that is relevant to the nominal output is determined, on the basis of which the radiator formed most similarly to the unknown radiator (1) with regard to the at least one form parameter (FP) relevant to the nominal output is determined in the radiator database (3), wherein
- if the unknown radiator (1) and the most similar radiator are identical with regard to the at least one form parameter (FP) relevant to the nominal output or a deviation of the determined form parameter value (FPWx) of the unknown radiator (1) from the form parameter value (FPW1) of the most similar radiator does not exceed a predetermined limit value, the nominal output (Qn1) of the most similar radiator is determined as the expected value of the nominal output of the unknown radiator (Qnx),
- if the deviation of the determined form parameter value (FPWx) of the unknown radiator (1) from the form parameter value (FPW1) of the most similar radiator exceeds the predetermined limit value, at least one further radiator formed less similarly to the unknown radiator (1) with regard to the at least one form parameter (FP) relevant to the nominal output is determined on the basis of the form parameter value (FPWx) of the at least one form parameter (FP) relevant to the nominal output, and the expected value of the nominal output (Qnx) of the unknown radiator (1) is determined by a trend analysis of the form parameter values (FPW1 and FPW2) of the most similar radiator and of the at least one less similarly formed radiator and their nominal outputs (Qn1 and Qn2).

5. Method according to one of the preceding claims,
wherein the expected value of the nominal output (Qnx) of the unknown radiator (1) is determined from multiple provisional expected values of the nominal output (Qnx1, Qnx2 and Qnx3), determined on the basis of various relevant form parameters (FP1, PF2 and FP3), in that for each form parameter (FP1, FP2, FP3) the radiator most similar to the unknown radiator (1) with respect to the respective form parameter (FP1, FP2, FP3) is determined from the radiator database (3) and with its nominal output the respective provisional expected value of the nominal output (Qnx1, Qnx2 and Qnx3) is determined while taking into account the deviation of the form parameter values between the unknown radiator (1) and the respectively most similar radiator, and then the expected value of the nominal output (Qnx) of the unknown radiator (1) is determined from these provisional expected values of the nominal output (Qnx1, Qnx2 and Qnx3), in particular by means of averaging of the provisional expected values of the nominal outputs (Qnx1, Qnx2 and Qnx3).

6. Method according to one of the preceding claims, wherein the expected value of the at least one thermal coupling parameter (cx) of the heating cost distributor (2) on the unknown radiator (1) is determined from multiple provisional expected values of the at least one thermal coupling parameter (cx1, cx2 and cx3) of the heating cost distributor (2) on the unknown radiator (1), determined on the basis of various relevant form parameters (FP1, PF2 and FP3), in that for each form parameter (FP1, FP2, FP3) the radiator most similar to the unknown radiator (1) with respect to the respective form parameter (FP1, FP2, FP3) is determined from the radiator database (3) and with its thermal coupling parameter the respective provisional expected value of the at least one thermal coupling parameter (cx1, cx2 and cx3) of the heating cost distributor (2) on the unknown radiator (1) is determined while taking into account the deviation of the form parameter values between the unknown radiator (1) and the respectively most similar radiator, and then the expected value of the at least one thermal coupling parameter (cx) of the heating cost distributor (2) on the unknown radiator (1) is determined from these provisional expected values of the at least one thermal coupling parameter (cx1, cx2 and cx3) of the heating cost distributor (2) on the unknown radiator (1), in particular by means of averaging of the provisional expected values of the at least one thermal coupling parameter (cx1, cx2 and cx3) of the heating cost distributor (2) on the unknown radiator (1).

7. Method according to one of the preceding claims,
wherein the form parameter value (FPWx) of the at least one form parameter (FP) of the unknown radiator (1) is determined by means of an image-supported method.

8. Method according to one of the preceding claims,
wherein the respective most similar radiator in the radiator database (3) is determined by means of an image-supported method, by an image comparison of an image of the respective radiator and the radiator database (3) with an image of the unknown radiator (1).

9. Parameterizing method for parameterizing an electronic heating cost distributor (2), wherein the expected value of the nominal output (Qnx) of the unknown radiator (2) and the expected value of the at least one thermal coupling parameter (cx) of the heating cost distributor (2) on the unknown radiator (1) are determined by means of a method according to one of the preceding claims and the electronic heating cost distributor (2) provided for the unknown radiator (1) is parameterized by means of the expected values determined.

## Revendications

1. Procédé de détermination d'une valeur attendue, conçue comme une valeur estimée, d'une puissance nominale (Qnx) d'un radiateur inconnu (1) et d'une valeur attendue, conçue comme une valeur estimée, d'au moins un paramètre de couplage thermique (cx) d'un répartiteur de coût électronique de chauffage (2) sur le radiateur inconnu (1), en particulier pour le paramétrage du répartiteur de coût de chauffage électronique (2) prévu pour le radiateur inconnu (1), la valeur attendue de la puissance nominale (Qnx) du radiateur inconnu (1) et la valeur attendue de l'au moins un paramètre de couplage thermique (cx) du répartiteur de coût de chauffage (2) sur le radiateur inconnu (1) étant déterminées au moyen d'une unité de détermination (4) en référence à une base de données de radiateurs (3) qui contient une pluralité de radiateurs différents ayant une valeur nominale respective de la puissance nominale et une valeur respective de l'au moins un paramètre de couplage thermique du répartiteur de coût de chauffage (2) sur le radiateur respectif, la base de données de radiateurs (3) contenant pour chaque radiateur une pluralité de paramètres de forme (FP) dont l'un au moins est pertinent pour la puissance nominale du radiateur respectif et/ou pour l'au moins un paramètre de couplage thermique du répartiteur de coût de chauffage (2) sur le radiateur respectif, en référence à une valeur de paramètre de forme déterminée (FPWx) de l'au moins un paramètre de forme (FP) du radiateur inconnu (1), pertinent pour la puissance nominale et/ou pour l'au moins un paramètre de couplage thermique du répartiteur de coût de chauffage (2) sur le radiateur inconnu (1), au moins le radiateur le plus similaire au radiateur inconnu (1) étant déterminé dans la base de données de radiateurs (3), la valeur attendue de la puissance nominale (Qnx) du radiateur inconnu (1) étant déterminée en référence à la puissance nominale (Qn1) dudit radiateur le plus similaire et/ou la valeur attendue de l'au moins un paramètre de couplage thermique (c1) du répartiteur de coût de chauffage (2) sur le radiateur inconnu (1) étant déterminée en référence à l'au moins un paramètre de couplage thermique (cx) du répartiteur de coût de chauffage (2) sur le radiateur le plus similaire.

2. Procédé selon la revendication 1, une valeur de paramètre de forme (FPWx) de l'au moins un paramètre de forme (FP) du radiateur inconnu (1), pertinent pour la puissance nominale, étant déterminée sur la base de laquelle le radiateur dont la forme est la plus similaire à celle du radiateur inconnu (1) en ce qui concerne l'au moins un paramètre de forme (FP) pertinent pour la puissance nominale est déterminé dans la base de données de radiateurs (3), la valeur attendue de la puissance nominale (Qnx) du radiateur inconnu (1) étant déterminée au moyen d'une analyse de tendance à partir de la puissance nominale (Qn1) de ce radiateur le plus similaire et d'un écart entre la valeur de paramètre de forme (FPWx) déterminée du radiateur inconnu (1) et la valeur de paramètre de forme (FPW1) du radiateur le plus similaire.

3. Procédé selon l'une des revendications précédentes,
une valeur de paramètre de forme (FPWx) de l'au moins un paramètre de forme (FP) du radiateur inconnu (1), pertinent pour l'au moins un paramètre de couplage thermique, étant déterminée sur la base de laquelle le radiateur dont la forme est la plus similaire à celle du radiateur inconnu (1) en ce qui concerne l'au moins un paramètre de forme (FP) pertinent pour l'au moins un paramètre de couplage thermique, est déterminé dans la base de données de radiateurs (3),
- si le radiateur inconnu (1) et le radiateur le plus similaire sont identiques en ce qui concerne l'au moins un paramètre de forme (FP) pertinent pour l'au moins un paramètre de couplage thermique ou si un écart de la valeur de paramètre de forme (FPWx) déterminée du radiateur inconnu (1) par rapport à la valeur de paramètre de forme (FPW1) du radiateur le plus similaire ne dépasse pas une valeur limite spécifiée, l'au moins un paramètre de couplage thermique (c1) du répartiteur de coût de chauffage (2) sur le radiateur le plus similaire étant déterminé comme étant la valeur attendue de l'au moins un paramètre de couplage thermique (cx) du répartiteur de coût de chauffage (2) sur le radiateur inconnu (1),
- si l'écart de la valeur du paramètre de forme (FPWx) déterminée du radiateur inconnu (1) par rapport à la valeur de paramètre de forme (FPW1) du radiateur le plus similaire dépasse la valeur limite spécifiée, au moins un autre radiateur dont la forme est moins similaire à celle du radiateur inconnu (1) en ce qui concerne l'au moins un paramètre de forme (FP) pertinent pour l'au moins un paramètre de couplage thermique étant déterminé sur la base de la valeur de paramètre de forme (FPWx) de l'au moins un paramètre de forme (FP), pertinent pour l'au moins un paramètre de couplage thermique, du répartiteur de coût de chauffage (2) sur le radiateur inconnu (1) dans la base de données de radiateurs (3) et la valeur attendue de l'au moins un paramètre de couplage thermique (cx) du répartiteur de coût de chauffage (2) sur le radiateur inconnu (1) étant déterminée par une analyse de tendance des valeurs de paramètre de forme (FPW1 et FPW2) du radiateur le plus similaire et de l'au moins un radiateur de forme moins similaire et de leurs paramètres de couplage thermique (cl et c2).

4. Procédé selon l'une des revendications précédentes,
une valeur de paramètre de forme (FPWx) de l'au moins un paramètre de forme (FP) du radiateur inconnu (1), pertinent pour la puissance nominale, étant déterminée, sur la base de laquelle le radiateur dont la forme est la plus similaire à celle du radiateur inconnu (1) en ce qui concerne au moins un paramètre de forme pertinent pour la puissance nominale (FP), est déterminé dans la base de données de radiateurs (3),
- si le radiateur inconnu (1) et le radiateur le plus similaire sont identiques en ce qui concerne l'au moins un paramètre de forme (FP) pertinent pour la puissance nominale ou si un écart de la valeur du paramètre de forme (FPWx) déterminée du radiateur inconnu (1) par rapport à la valeur du paramètre de forme (FPW1) du radiateur le plus similaire ne dépasse pas une valeur limite spécifiée, la puissance nominale (Qn1) du radiateur le plus similaire étant déterminée comme étant la valeur attendue de la puissance nominale du radiateur inconnu (Qnx),
- si l'écart de la valeur du paramètre de forme (FPWx) déterminée du radiateur inconnu (1) par rapport à la valeur du paramètre de forme (FPW1) du radiateur le plus similaire dépasse la valeur limite spécifiée, au moins un autre radiateur dont la forme est moins similaire à celle du radiateur inconnu (1) en ce qui concerne au moins un paramètre de forme (FP) pertinent pour la puissance nominale étant déterminé sur la base de la valeur du paramètre de forme (FPWx) de l'au moins un paramètre de forme (FP) pertinent pour la puissance nominale, et la valeur attendue de la puissance nominale (Qnx) du radiateur inconnu (1) étant déterminée par une analyse de tendance des valeurs de paramètre de forme (FPW1 et FPW2) du radiateur le plus similaire et de l'au moins un radiateur de forme moins similaire et de leurs puissances nominales (Qn1 et Qn2).

5. Procédé selon l'une des revendications précédentes, la valeur attendue de la puissance nominale (Qnx) du radiateur inconnu (1) étant déterminée à partir de plusieurs valeurs attendues provisoires de la puissance nominale (Qnx1, Qnx2 et Qnx3), déterminées à partir de divers paramètres de forme pertinents (FP1, PF2 et FP3) en ce que le radiateur le plus similaire au radiateur inconnu (1) en ce qui concerne le paramètre de forme respectif (FP1, FP2, FP3) est déterminé pour chaque paramètre de forme (FP1, FP2, FP3) à partir de la base de données de radiateurs (3) et la valeur attendue provisoire respective de la puissance nominale (Qnx1, Qnx2 et Qnx3) est déterminée avec la puissance nominale du radiateur le plus similaire, avec prise en compte de l'écart des valeurs de paramètres de forme entre le radiateur inconnu (1) et le radiateur le plus similaire respectif, et la valeur attendue de la puissance nominale (Qnx) du radiateur inconnu (1) est déterminée à partir de ces valeurs attendues provisoires de la puissance nominale (Qnx1, Qnx2 et Qnx3), notamment par formation de la moyenne des valeurs attendues provisoires de la puissance nominale (Qnx1, Qnx2 et Qnx3).

6. Procédé selon l'une des revendications précédentes, la valeur attendue de l'au moins un paramètre de couplage thermique (cx) du répartiteur de coût de chaleur (2) sur le radiateur inconnu (1) étant déterminée à partir de plusieurs valeurs attendues provisoires de l'au moins un paramètre de couplage thermique (cx1, cx2 et cx3) du répartiteur de coût de chaleur (2) sur le radiateur inconnu (1), lesquelles sont déterminées à partir de divers paramètres de forme pertinents (FP1, PF2 et FP3), en ce que le radiateur le plus similaire au radiateur inconnu (1) en ce qui concerne le paramètre de forme respectif (FP1, FP2, FP3) est déterminé pour chaque paramètre de forme (FP1, FP2, FP3) à partir de la base de données de radiateurs (3) et la valeur attendue provisoire respective de l'au moins un paramètre de couplage thermique (cxl, cx2 et cx3) du répartiteur de coût de chauffage (2) sur le radiateur inconnu (1) est déterminé avec le paramètre de couplage thermique du radiateur le plus similaire, avec prise en compte de l'écart des valeurs des paramètres de forme entre le radiateur inconnu (1) et le radiateur le plus similaire, et la valeur attendue de l'au moins un paramètre de couplage thermique (cx) du répartiteur de coût de chauffage (2) sur le radiateur inconnu (1) est déterminée à partir de ces valeurs attendues provisoires de l'au moins un paramètre de couplage thermique (cx1, cx2 et cx3) du répartiteur de coût de chauffage (2) sur le radiateur inconnu (1), notamment par formation de la moyenne des valeurs attendues provisoires de l'au moins un paramètre de couplage thermique (cx1, cx2 et cx3) du répartiteur de coût de chauffage (2) sur le radiateur inconnu (1).

7. Procédé selon l'une des revendications précédentes, la valeur de paramètre de forme (FPWx) de l'au moins un paramètre de forme (FP) du radiateur inconnu (1) étant déterminée à l'aide d'un procédé assisté par image.

8. Procédé selon l'une des revendications précédentes, le radiateur respectif le plus similaire dans la base de données de radiateurs (3) étant déterminé à l'aide d'un procédé assisté par image par comparaison d'une image du radiateur respectif dans la base de données de radiateurs (3) à une image du radiateur inconnu (1).

9. Procédé de paramétrage d'un répartiteur de coût de chauffage électronique (2), la valeur attendue de la puissance nominale (Qnx) du radiateur inconnu (1) et la valeur attendue de l'au moins un paramètre de couplage thermique (cx) du répartiteur de coût de chauffage (2) sur le radiateur inconnu (1) étant déterminées au moyen d'un procédé selon l'une des revendications précédentes et le répartiteur de coût de chauffage électronique (2) prévu pour le radiateur inconnu (1) étant paramétré au moyen des valeurs attendues déterminées.
